# EUROPÄISCHE PATENTSCHRIFT

(11) **EP 1 370 381 B1**
(45) Veröffentlichungstag und Bekanntmachung des Hinweises auf die Patenterteilung: **15.09.2004**
(21) Anmeldenummer: 02722088.8
(22) Anmeldetag: 16.02.2002
(51) Int. Cl.: B22F 3/11, B01D 39/14, C03B 37/00, B32B 15/02, B32B 17/02, B32B 18/00, B01J 35/06, F23D 3/40

(54) **GESINTERTER, HOCHPORÖSER KÖRPER SOWIE VERFAHREN ZU DESSEN HERSTELLUNG**
SINTERED, HIGHLY POROUS BODY AND METHOD FOR THE PRODUCTION THEREOF
CORPS FRITTE DE HAUTE POROSITE ET SON PROCEDE DE FABRICATION

(30) Priorität: 13.03.2001 DE 10111892
(43) Veröffentlichungstag der Anmeldung: 17.12.2003
(73) Patentinhaber: GKN Sinter Metals GmbH, 42477 Radevormwald (DE)
(72) Erfinder: HEIBURG, Klaus, 42477 Radevormwald (DE)
(74) Vertreter: Maxton Langmaack & Partner
(86) Internationale Anmeldenummer: PCT/EP2002/001678
(87) Internationale Veröffentlichungsnummer: WO 2002/072298

(56) Entgegenhaltungen:
- EP-A- 1 193 009
- WO-A-99/54524
- DE-A- 1 911 941
- DE-A- 19 736 971
- DE-A- 19 924 675
- DE-A- 19 963 698
- DE-C- 4 401 799
- DE-C- 19 507 645
- US-A- 4 729 871

## Beschreibung

Die vorliegende Erfindung betrifft einen gesinterten, hochporösen Körper, umfassend mindestens eine Schicht aus sinterbarem Material, welches Fasern umfaßt, sowie ein Verfahren zu dessen Herstellung und dessen Verwendung.

Gesinterte, hochporöse Körper werden für unterschiedlichste technische Zwecke eingesetzt. Insbesondere werden sie eingesetzt als Verbrennungselemente, wo sie aufgrund ihrer Porosität in der Lage sind, flüssigen Brennstoff temporär aufzunehmen und an den Oberflächen des Elementes zu verdampfen. Derartige Verbrennungselemente müssen dementsprechend hohen Temperaturen standhalten. Gesinterte, hochporöse Körper werden insbesondere auch in Standheizungen von Automobilen benötigt.

Aus dem Stand der Technik ist bekannt, hochporöse Körper aus sinterfähigen Metallpulvern herzustellen. Allerdings lassen sich mit derartigen Metallpulvern lediglich Porositäten in einer Größenordnung von wenig mehr als etwa 60 % erzielen. Zur Erreichung höherer Porositäten ist weiterhin bekannt, sinterfähige Metallfasern einzusetzen. Derartige sinterbare Metallfasern können anschließend zu Vliesen verwebt werden, welche dann gesintert werden. Derartige Vliese können Porositäten bis nahe an 90 % aufweisen.

Für mögliche Anwendungen hochporöser Körper, insbesondere als Verbrennungselemente, werden gute Abbrandeigenschaften und Werte für die Flammenhaftung gefordert. Gleichzeitig müssen derartige Elemente hohe Porositäten aufweisen. Je höher jedoch die Porosität des Körpers, um so geringer sind die erzielbaren Werte für die Flammenhaftung sowie die Abbrandeigenschaften des Körpers.

Aufgabe der vorliegenden Erfindung ist es, gesinterte, hochporöse Körper zur Verfügung zu stellen, welche die vorgenannten Nachteile nicht aufweisen.

Diese Aufgabe wird erfindungsgemäß dadurch gelöst, daß ein gesinterter, hochporöser Körper zur Verfügung gestellt wird, umfassend mindestens eine Schicht aus sinterbarem Material, welches Fasern mit einem halbellipsenförmigen Querschnitt umfaßt, die auf einer Seite gewölbt ausgebildet und auf der anderen Seite flach ausgebildet sind, und die eine Hauptachse von kürzer als 1 mm und eine Nebenachse von kürzer als 200 µm aufweisen, wobei die Hauptachse länger als die Nebenachse ist. Derartige gesinterte, hochporöse Körper weisen gegenüber aus dem Stand der Technik bekannten gesinterten Körpern aus konventionellen Metallfasern, insbesondere solchen zu Vliesen verarbeiteten, deutlich verbesserte Werte für die Abbrandeigenschaften sowie für die Flammenhaftung auf. Die Fasern weisen eine größere spezifische Oberfläche im Vergleich zu gegebenenfalls zu Vliesen verarbeiteten und im Stand der Technik bekannten Metallfasern auf, wodurch verbesserte Eigenschaften erzielt werden. Vorteilhaft weisen die eingesetzten Fasern scharfe Kanten auf, die insbesondere im Einsatz als verbrennungsförderndes Element, beispielsweise bei der Verdampfung von liquiden Brennstoffen, eine aktivierende Wirkung aufweisen.

Unter sinterbarem Material im Sinne der Erfindung werden Materialien verstanden, hergestellt aus Metall, Metalloxiden, Keramiken und/oder Kunststoffen. Verwendbare metallische Materialien im Sinne der Erfindung sind nicht nur Materialien aus reinen Metallen, sondern auch Materialien aus Metallegierungen und/oder Materialmischungen aus unterschiedlichen Metallen und Metallegierungen zu verstehen. Hierzu gehören insbesondere Stähle, vorzugsweise Chrom-Nickel-Stähle, Bronzen, Nickelbasis-Legierungen, Hastalloy, Inconel oder dergleichen, wobei die Materialmischungen auch hochschmelzende Bestandteile enthalten können, wie beispielsweise Platin. Die eingesetzten Fasern können metallisch oder keramisch sein. Besonders bevorzugt werden als Fasern Eisenwerkstoffe (beispielsweise gemäß Werkstoffnorm 1.0495, 1.4113 oder 1.4841) und/oder Legierungen auf Basis Eisen-Chrom-Aluminium oder Nickel-Aluminium verwendet. Aluminiumhaltige Legierungen sind dabei bevorzugt, da diese eine hohe Temperaturbeständigkeit und eine hohe Korrosionsbeständigkeit aufweisen. Bevorzugt sind dabei Aluminiumgehalte in einem Bereich von 10 bis 40 Gew%, bezogen auf die Gesamtmenge der in der Legierung vorhandenen Metalle. Weiter bevorzugt besteht der erfindungsgemäße, gesinterte, hochporöse Körper ausschließlich aus metallischen Fasern. Allerdings können im Sinne der Erfindung auch Gemische aus Pulvern mit Fasern als sinterbare Materialien Verwendung finden.

Liegen die Fasern in dem erfindungsgemäßen Körper mit Wölbungen auf ihren beiden Seiten vor, so kann deren Querschnitt in etwa als ellipsenförmig beschrieben werden. Wird eine derartige Faser entlang der Längsachse derselben und in Richtung der Hauptachse geteilt, so wird eine in etwa halbellipsenförmig ausgebildete Faser erhalten. Derartige, nur auf einer Seite gewölbte Fasern sind besonders bevorzugt, da diese eine weiter erhöhte spezifische Oberfläche aufweisen, wodurch die geforderten Abbrandeigenschaften und Werte für die Flammenhaftung weiter erhöht werden. Derartige Fasern weisen somit eine flache und eine gewölbte Seite auf.

Besonders bevorzugt ist die Hauptachse der Faser kürzer als 500 µm sowie die Nebenachse kürzer als 100 µm. Die Länge der Hauptachse und der Nebenachse wird am Querschliff der Fasern mittels eines Mikroskopes mit 100 bis etwa 500-facher Vergrößerung bestimmt.

Weiterhin weisen die eingesetzten Fasern bevorzugt unterschiedliche Längen auf, wodurch sich beim Sinterprozeß eine sehr stabile Fasermatrix ausbildet. Diese kann in einer weiter bevorzugten Ausgestaltung der Erfindung weiter verbessert werden durch Einsatz von Fasern, welche mindestens einfach entlang der Längsachse geknickt sind. Hierdurch können sich die Fasern gegenseitig besser verhaken, wodurch die Stabilität der Fasermatrix weiter erhöht wird. Der Anteil an geknickten Fasern an der Gesamtmenge der eingesetzten Fasern liegt bevorzugt in einem Bereich von mindestens 20 Gew%.

In einer weiteren Ausgestaltung der Erfindung sind die Fasern um ihre Längsachse verdreht. Der Anteil derartig verdrehter Fasern beträgt mindestens 15 Gew% der Fasern, bezogen auf deren Gesamtmenge, besonders bevorzugt 40 bis 60 Gew%. Die Fasern sind bevorzugt mindestens um eine halbe Drehung um die Längsachse verdreht, weiter bevorzugt weisen sie mehr als eine Drehung um ihre Längsachse auf.

Derartige erfindungsgemäße Körper weisen vorteilhafterweise höhere mechanische Eigenschaften auf, da durch die Verdrehung der Fasern um ihre Längsachse bessere Sinterkontakte geschaffen werden. Weiterhin weisen derartige erfindungsgemäße Körper bessere Abbrandeigenschaften auf.

Weiter bevorzugt nimmt die Länge der Nebenachse der Fasern von der Mitte aus zu den Enden ab. Beispielsweise liegt hierbei die Länge der Nebenachse in der Mitte einer Faser in einem Bereich von etwa 100 µm, wohingegen die Länge der Nebenachse am Ende einer Faser in einem Bereich von etwa 20 µm liegt. Das Verhältnis der Länge der Nebenachse in der Mitte einer Faser zu der Länge der Nebenachse am Ende einer Faser beträgt bevorzugt mehr als 2:1, weiter bevorzugt mehr als 3:1. Der Anteil derartiger Fasern im erfindungsgemäßen Körper beträgt bevorzugt wenigstens 20 Gew% und liegt weiter bevorzugt in einem Bereich von 15 bis 50 Gew%.

In einer weiteren Ausgestaltung der Erfindung weisen die gewölbten Seiten quer zu der Längsachse der Fasern verlaufende Ausnehmungen auf. Aufgrund dieser Ausnehmungen, welche beispielsweise rillenförmig ausgebildet sein können, weist die gewölbte Seite der Faser eine als wellenförmig zu beschreibende Oberfläche auf. Hierdurch wird vorteilhafterweise die spezifische Oberfläche der im erfindungsgemäßen Körper verwendeten Fasern erhöht, wodurch dieser weiter verbesserte Abbrandeigenschaften und Werte für die Flammenhaftung aufweist.

Weiter bevorzugt weist der Körper mindestens eine weitere, nicht gesinterte Schicht auf. Die weitere, nicht gesinterte Schicht kann beispielsweise ein Lochblech oder ein Drahtgewebe o.ä. sein, bevorzugt aus dem gleichen Werkstoff wie das sinterbare Material, insbesondere die Fasern.

Schließlich weist vorteilhafterweise der erfindungsgemäße Körper eine Porenverteilung in einem Bereich von 5 bis 150 µm, bevorzugt 10 bis 100 µm, auf. Die Porenverteilung wird dabei mittels eines Porometers gemäß der Norm ASSME 12/94 bestimmt. Dabei weist der erfindungsgemäße Körper vorzugsweise eine Porosität von mindestens 80 %, bevorzugt mehr als 90 %, weiter bevorzugt mehr als 93 %, sowie ein Flächengewicht von mindestens 50 g/m² auf. Derartige erfindungsgemäße Körper sind nicht nur hochporös, sondern weisen auch ausgesprochen große spezifische Oberflächen auf, welche die Abbrandeigenschaften des erfindungsgemäßen Körpers vorteilhaft beeinflussen. Zudem kann insbesondere bei Verwendung als beispielsweise Verbrennungs- bzw. Dochtelement der erfindungsgemäße Körper große Mengen an Verbrennungsflüssigkeit aufnehmen.

Weiterhin betrifft die vorliegende Erfindung ein Verfahren zur Herstellung gesinterter, hochporöser Körper mit mindestens einer Schicht aus einem sinterbaren Material, umfassend Fasern, wobei
- in einem ersten Schritt die Fasern auf eine Länge von maximal 20 mm verkürzt werden;
- in einem zweiten Schritt das Material mit einem Schüttvolumen von 0,2 bis 0,4 g/cm² aufgetragen wird; und
- in einem dritten Schritt das Material gesintert wird.

Durch die im ersten Schritt erfolgende Verkürzung der eingesetzten Fasern wird vorteilhafterweise eine große mechanische Stabilität und Gleichmäßigkeit der herzustellenden Körper erreicht. Mit Fasern dieser Länge können bei einem Schüttvolumen von 0,2 bis 0,4 g/cm² Körper von großer mechanischer Festigkeit und gleichzeitig hoher Gleichmäßigkeit erzeugt werden. Bevorzugt ist dabei vorgesehen, daß die Fasern vereinzelt im zweiten Schritt aufgetragen werden. Die Vereinzelung der Fasern wird unter Einwirkung von gerichteten mechanischen Schwingungen auf das Haufwerk beim Einfüllen in die Schüttform bewirkt. Die Agitation des Haufwerks durch Einwirkung von gerichteten mechanischen Schwingungen kann beispielsweise dadurch bewirkt werden, daß die Faserzufuhr aus dem Faserhaufwerk zur Form über einen Schwingförderer erfolgt. Es kann auch vorgesehen sein, daß die Vereinzelung durch Agitation des Haufwerks auf einer Siebfläche beim Einfüllen in die Form bewirkt wird. Je nach Ausgestaltung der Form kann hierbei eine schwingende Siebfläche oder auch eine rotierende Siebfläche vorgesehen werden, auf die das Haufwerk aufgebracht wird. Hierbei reicht eine verhältnismäßig grobmaschige Siebfläche mit einer Maschengröße von etwa 0,5 bis 5 mm aus. Durch die Umwälzung des Haufwerks auf der Siebfläche wird erreicht, daß sich aus dem Haufwerk immer nur im Bereich der Sieböffnungen Fasern aus dem Haufwerk lösen und in die Form einfallen.

Weiterhin ist bevorzugt vorgesehen, daß bei der Vereinzelung des eingesetzten Materials, insbesondere der Fasern, die Form relativ zum Materialzulauf bewegt wird. Die Relativbewegung zwischen dem Materialzulauf, beispielsweise dem Abwurfende einer Schwingförderrinne oder im Unterlauf eines Siebes, richtet sich nach der geometrischen Form des herzustellenden porösen Körpers. Die Form kann hierbei rotieren oder relativ zum Faserzulauf in einer Ebene hin- und herbewegt werden. Für den Fall, daß der herzustellende hochporöse Körper zur Befestigung in entsprechenden Gehäusen Anschlußelemente aufweisen muß, ist in weiterer Ausgestaltung der Erfindung vorgesehen, daß wenigstens ein mit dem porösen Körper zu verbindendes Anschlußelement als Formelement in die Form eingelegt und mit angesintert wird.

Weiter bevorzugt wird zusätzlich nach dem zweiten Schritt das Material in einem weiteren Schritt verdichtet. Hierdurch entsteht ein stabiler poröser Grünkörper, der anschließend im dritten Schritt gesintert wird. Der Grünkörper ist separat weiter handhabbar. Ein derartiger Grünkörper weist eine hohe Maßhaltigkeit auf und kann anschließend praktisch ohne nennenswerte Schrumpfung zu einem festen und stabilen porösen Körper gesintert werden.

Weiter bevorzugt wird das Material im zweiten Schritt auf eine weitere, nicht gesinterte Schicht aufgebracht und anschließend mit dieser im dritten Schritt versintert. Hierdurch kann ein fester Halt zwischen der Schicht aus sinterbarem Material und der nicht gesinterten Schicht erhalten werden. Bevorzugt bestehen die beiden Schichten aus dem gleichen Werkstoff. Insbesondere kann die weitere Schicht ein Lochblech oder aber Drahtgewebe sein.

Schließlich betrifft die vorliegende Erfindung die Verwendung des erfindungsgemäßen Körpers als Verdampfer- bzw. Dochtelement in Standheizungen und/oder Zusatzheizungen, insbesondere in Automobilen, als Flammenhalter bei Brennern, als Wärmeverteilerplatte, als verbrennungsförderndes Element, als Wärmetauscher und/oder als Katalysator für heterogene Reaktionen. In sämtlichen der vorgenannten Anwendungen weist der erfindungsgemäße Körper aufgrund seiner stark vergrößerten spezifischen Oberfläche im Vergleich zu im Stand der Technik bekannten porösen Körpern ausgezeichnete Eigenschaften hinsichtlich insbesondere der Flammenhaftung auf. Heterogene Reaktionen bei Verwendung des erfindungsgemäßen Körpers als Katalysator laufen aufgrund der vielen Ecken und Kanten, die die zur Herstellung des erfindungsgemäßen Körpers verwendeten Fasern aufweisen, erheblich schneller ab. Die Abbrandeigenschaften, welche bei den vorgenannten Anwendungen wesentlich sind, sind bei dem erfindungsgemäßen Körper deutlich erhöht.

Dieser und weitere Vorteile der vorliegenden Erfindung werden anhand der beigefügten Zeichnung näher erläutert. Es zeigen:
- Fig. 1:: eine mikroskopische Vergrößerung im Maßstab 68,9:1 eines aus einem erfindungsgemäßen Körper hergestellten Brennelementes; und
- Fig. 2:: eine skizzenhafte Darstellung eines Querschnittes durch eine im Brennelement eingesetzten Faser.

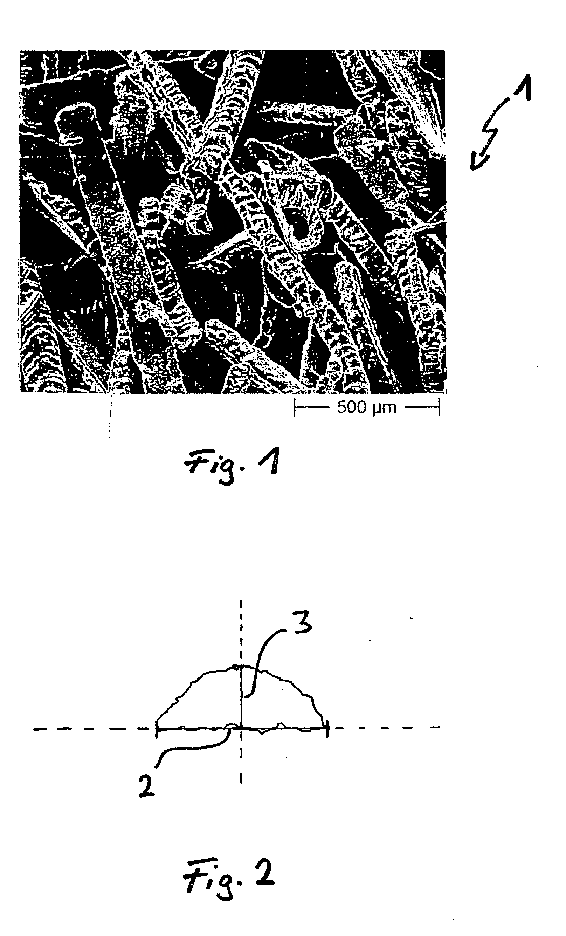

In Fig. 1 weist der insgesamt mit dem Bezugszeichen 1 versehene gezeigte Körper (Verbrennungselement) Fasern auf, welche auf einer Seite gewölbt sind, deren andere Seite jedoch im wesentlichen flach ausgebildet ist. Sie entsprechen somit im Querschnitt einer Halbellipse. Sie weisen auf der gewölbten Oberfläche rillenförmige Ausnehmungen auf (helle Bereiche). Weiterhin sind Knicke und Drehungen entlang der Längsachse der Fasern zu erkennen.

Fig. 2 zeigt in einer skizzenhaften Darstellung den Aufbau der im Körper 1 eingesetzten Fasern, wobei hier deutlich die Hauptachse 2 und die Nebenachse 3 zu erkennen sind.

Das in Fig. 1 gezeigte Verbrennungselement weist eine erste Schicht aus einem sinterbaren Material, nämlich aus Fasern des Werkstoffes 1.4841, auf, welche auf eine weitere Schicht, nämlich ein Drahtgewebe mit einer Maschenweite von 2 mm, aufgebracht und mit diesem versintert wurde. Hierbei wurde ein Flächengewicht für die faserhaltige Schicht von 150 g/m² eingestellt. Die Fasern wiesen eine Länge der Hauptachse von 350 µm und eine Länge der Nebenachse von 50 µm auf. Die Länge der Fasern lag in einem Bereich von etwa 5 bis 15 mm. Das mittels eines Schwingförderers auf das Drahtgewebe aufgebrachte Haufwerk aus Fasern wurde anschließend bei einer Temperatur von etwa 1.280° C im Vakuum mit dem Drahtgewerbe versintert. Hierdurch wurde ein erfindungsgemäßer Körper hergestellt, welcher eine Porosität größer 90 % und eine Porenverteilung in einem Bereich von 12 µm bis 100 µm aufwies.

Durch die vorliegende Erfindung werden gesinterte, hochporöse Körper zur Verfügung gestellt, welche im Vergleich zu den im Stand der Technik bekannten üblichen porösen Körpern insbesondere bei Einsatz als Verbrennungs- bzw. Dochtelement verbesserte Abbrandeigenschaften und bessere Werte für die Flammenhaftung bei gleichbleibend hoher Porosität aufweisen.

## Patentansprüche

1. Gesinterter, hochporöser Körper, umfassend mindestens eine Schicht aus sinterbarem Material, welches Fasern mit einem halbellipsenförmigen Querschnitt umfaßt, die auf einer Seite gewölbt ausgebildet und auf der anderen Seite im wesentlichen flach ausgebildet sind, und die eine Hauptachse (2) von kürzer als 1 mm und eine Nebenachse (3) von kürzer als 200µm aufweisen, wobei die Hauptachse länger als die Nebenachse ist.

2. Gesinterter, hochporöser Körper gemäß Anspruch 1, **dadurch gekennzeichnet, daß** die Fasern (1) um ihre Längsachse verdreht sind.

3. Gesinterter, hochporöser Körper gemäß Anspruch 1 oder 2, **dadurch gekennzeichnet, daß** die Länge der Nebenachse (3) der Fasern (1) von der Mitte aus zu den Enden abnimmt.

4. Gesinterter, hochporöser Körper gemäß einem der vorhergehenden Ansprüche, **dadurch gekennzeichnet, daß** die gewölbten Seiten quer zu der Längsachse der Fasern (1) verlaufende Ausnehmungen aufweisen.

5. Gesinterter, hochporöser Körper gemäß einem der vorhergehenden Ansprüche, **dadurch gekennzeichnet, daß** der Körper mindestens eine weitere, nicht gesinterte Schicht aufweist.

6. Gesinterter, hochporöser Körper gemäß einem der vorhergehenden Ansprüche, **dadurch gekennzeichnet, daß** der Körper eine Porenverteilung in einem Bereich von 5 bis 150 µm, bevorzugt 10 bis 100 µm, aufweist.

7. Verfahren zur Herstellung hochporöser Körper gemäß einem der Ansprüche 1 bis 6 mit mindestens einer Schicht aus einem sinterbaren Material, umfassend Fasern (1), wobei
- in einem ersten Schritt die Fasern (1) auf eine Länge von max. 20 mm verkürzt werden;
- in einem zweiten Schritt das Material mit einem Schüttvolumen von 0,2 bis 0,4 g/cm² aufgetragen wird; und
- in einem dritten Schritt das Material gesintert wird.

8. Verfahren gemäß Anspruch 7, **dadurch gekennzeichnet, daß** zusätzlich nach dem zweiten Schritt das Material in einem weiteren Schritt verdichtet wird.

9. Verfahren gemäß einem der Ansprüche 7 oder 8, **dadurch gekennzeichnet, daß** das Material im zweiten Schritt auf mindestens eine weitere, nicht gesinterte Schicht aufgebracht und anschließend mit dieser im dritten Schritt versintert wird.

10. Verwendung eines gesinterten, hochporösen Körpers gemäß einem der Ansprüche 1 bis 6 als Verdampfer- bzw. Dochtelement in Standheizungen und/oder Zusatzheizungen, als Flammenhalter bei Brennern, als Wärmeverteilerplatte, als verbrennungsförderndes Element, als Wärmetauscher und/oder Katalysator für heterogene Reaktionen.

## Claims

1. Sintered, highly porous body comprising at least one layer made of sinterable material that comprises fibers with a hemiellipsoidal cross section, which are curved on one side and largely flat on the other side, and have a principal axis (2) that is shorter than 1 mm and a secondary axis (3) that is shorter than 200 µm, whereby the principal axis is longer than the secondary axis.

2. Sintered, highly porous body according to claim 1, **characterised in that** the fibers (1) are twisted around their longitudinal axis.

3. Sintered, highly porous body according to claim 1 or 2, **characterised in that** the length of the secondary axis (3) of the fibers (1) decreases from their middle towards their ends.

4. Sintered, highly porous body according to one of the afore mentioned claims, **characterised in that** the curved sides have recesses running crosswise to the longitudinal axis of the fibers (1).

5. Sintered, highly porous body according to one of the afore mentioned claims, **characterised in that** the body has at least one further, not sintered layer.

6. Sintered, highly porous body according to one of the afore mentioned claims, **characterised in that** the body has a pore distribution in a range of 5 to 150 µm, preferred 10 to 100 µm.

7. Method for producing highly porous bodies according to one of the claims 1 to 6 with at least one layer made of a sinterable material, comprising fibers (1), whereby
- in a first step the fibers (1) are cut to a length of a maximum of 20 mm;
- in a second step the material is applied with a pouring volume of 0.2 to 0.4 g/cm²; and
- in a third step the material is sintered.

8. Method according to claim 7, **characterised in that** the material is additionally compressed in a further step following the second step.

9. Method according to one of the claims 7 or 8, **characterised in that** the material is applied onto at least one further not sintered layer in a second step and subsequently sintered with this layer in a third step.

10. Use of a sintered, highly porous body according to one of the claims 1 to 6 as evaporating or wick element in auxiliary heatings and/or additional heatings, as flame support in burners, as heat distributor plate, as combustion supporting element, as heat exchanger and/or as catalyst for heterogeneous reactions.

## Revendications

1. Corps fritté de haute porosité, comprenant au moins une couche de matière frittable, qui comprend des fibres d'une section semi-elliptique, qui sont conçues bombées d'un côté et essentiellement plates de l'autre côté, et qui présentent un axe principal (2) inférieur à 1mm et un axe secondaire (3) inférieur à 200 µm, l'axe principal étant plus long que l'axe secondaire.

2. Corps fritté de haute porosité selon la revendication 1, **caractérisé en ce que** les fibres (1) sont torsadées autour de leur axe longitudinal.

3. Corps fritté de haute porosité selon la revendication 1 ou 2, **caractérisé en ce que** la longueur de l'axe secondaire (3) des fibres(1) diminue du milieu aux extrémités.

4. Corps fritté de haute porosité selon l'une quelconque des revendications précédentes, **caractérisé en ce que** les côtés bombés présentent des évidements s'étendant transversalement à l'axe longitudinal des fibres (1).

5. Corps fritté de haute porosité selon l'une quelconque des revendications précédentes, **caractérisé en ce que** ce corps présente au moins une autre couche non frittée.

6. Corps fritté de haute porosité selon l'une quelconque des revendications précédentes, **caractérisé en ce que** ce corps présente une répartition de pores située dans une plage de 5 à 150 µm, de préférence 10 à 100 µm.

7. Procédé pour la fabrication de corps frittés de haute porosité selon l'une quelconque des revendications 1 à 6 avec au moins une couche constituée d'une matière frittable comprenant des fibres (1), dans lequel
• au cours d'une première étape, les fibres (1) sont raccourcies à une longueur maximum de 20 mm;
• au cours d'une deuxième étape, la matière est appliquée avec un volume apparent de 0,2 à 0,4 g/cm²; et
• au cours d'une troisième étape, la matière est frittée.

8. Procédé selon la revendication 7, **caractérisé en ce qu'**en plus, après la deuxième étape, la matière est densifiée au cours d'une autre étape.

9. Procédé selon l'une quelconque des revendications 7 ou 8, **caractérisé en ce que** la matière est appliquée au cours de la deuxième étape sur au moins une autre couche non frittée et est ensuite frittée avec celle-ci au cours de la troisième étape.

10. Utilisation d'un corps fritté de haute porosité selon l'une quelconque des revendications 1 à 6 comme élément d'évaporateur ou de mèche dans des chauffages installés à demeure et/ou des chauffages d'appoint, comme support de flamme dans des brûleurs, comme plaque de répartition de chaleur, comme élément favorisant la combustion, comme échangeur de chaleur et/ou catalyseur pour réactions hétérogènes.
